# EUROPÄISCHE PATENTSCHRIFT

(11) **EP 4 260 546 B1**
(45) Veröffentlichungstag und Bekanntmachung des Hinweises auf die Patenterteilung: **02.10.2024**
(21) Anmeldenummer: 21819106.2
(22) Anmeldetag: 22.11.2021
(51) Int. Cl.: H04L 67/125, H04L 67/306

(54) **SYSTEM UND VERFAHREN ZUR KOMMUNIKATION MIT EINEM KRAFTFAHRZEUG**
SYSTEM AND METHOD FOR COMMUNICATING WITH A MOTOR VEHICLE
SYSTÈME ET PROCÉDÉ POUR COMMUNIQUER AVEC UN VÉHICULE AUTOMOBILE

(30) Priorität: 09.12.2020 DE 102020132712
(43) Veröffentlichungstag der Anmeldung: 18.10.2023
(73) Patentinhaber: Audi AG, 85045 Ingolstadt (DE)
(72) Erfinder: FRANKE, Christoph, 85053 Ingolstadt (DE); KONRADT, Kevin, 85101 Lenting (DE)
(86) Internationale Anmeldenummer: PCT/EP2021/082524
(87) Internationale Veröffentlichungsnummer: WO 2022/122366

(56) Entgegenhaltungen:
- CN-A- 111 405 041
- KR-A- 20180 116 986
- MADHU SANJEEVI ( MADY ): "Chapter 11: ChatBots to Question & Answer systems. | by Madhu Sanjeevi ( Mady ) | Deep Math Machine learning.ai | Medium", 19 April 2018 (2018-04-19), pages 1 - 20, XP055923357, Retrieved from the Internet <URL:https://medium.com/deep-math-machine-learning-ai/chapter-11-chatbots-to-question-answer-systems-e06c648ac22a> [retrieved on 20220520]
- LEX FRIDMAN: "Human-Centered Autonomous Vehicle Systems: Principles of Effective Shared Autonomy", ARXIV.ORG, CORNELL UNIVERSITY LIBRARY, 201 OLIN LIBRARY CORNELL UNIVERSITY ITHACA, NY 14853, 3 October 2018 (2018-10-03), XP080929601

## Beschreibung

Die Erfindung betrifft ein System und ein Verfahren zur Kommunikation mit einem Kraftfahrzeug.

Die digitale Vernetzung zwischen Personen schreitet immer weiter voran. Zur Vernetzung werden dabei oft Social-Media-Applikationen verwendet, um sich untereinander auszutauschen und Nachrichten und/oder mediale Inhalte über die Social-Media-Applikationen zu senden. Dabei gibt es eine Reihe von Anbietern von Social-Media-Applikationen, beispielsweise kommerzielle oder nicht-kommerzielle Anbieter, mit denen sich Personen in Gemeinschaften vernetzen können, indem die Personen bei dem betreffenden Anbieter ein Social-Media-Profil anlegen, um die Social-Media-Applikationen nutzen zu können. Beispielsweise können dann mit der Social-Media-Applikation Texte, insbesondere Textnachrichten, und/oder Sprachnachrichten ausgetauscht werden. Einige Anbieter für Social-Media-Applikationen zur Kommunikation zwischen Personen sind beispielsweise WhatsApp^{™}, Threema^{™}, Facebook^{™}, Twitter^{™}, Signal^{™} oder iChat^{™}.

Auch eine Vernetzung mit Gegenständen nimmt immer weiter zu. So sind beispielsweise Kraftfahrzeuge bereits mit einem Server, insbesondere einem Fahrzeugflottenserver, der beispielsweise von einem Hersteller des Kraftfahrzeugs betrieben wird, verbunden. Dies ermöglicht Benutzern, Daten von dem Kraftfahrzeug abzufragen und Funktionen des Fahrzeugs fernzusteuern, wobei hierfür meistens eine vom Fahrzeughersteller bereitgestellte Applikation oder Fernbedienung verwendet wird. So kann beispielsweise der Ladezustand einer Hochvoltbatterie abgefragt oder die Standheizung aktiviert werden.

Beispielsweise umfasst die DE 10 2016 008 396 A1 ein System zur drahtlosen Steuerung von Funktionen eines Fahrzeugs, wobei ein Kommunikationsmodul eine drahtlose Kommunikation zwischen einem Steuergerät des Fahrzeugs und einer Fernbedienung ermöglicht.

Aus der US 10 334 050 B2 ist eine Softwareapplikation und eine Logik bekannt, um eine Einstellung eines autonomen Fahrzeugs zu modifizieren.

Die CN 108391004 A umfasst ein Fahrzeugsteuersystem und ein Verfahren, das auf einer Mobiltelefonapplikation basiert, wobei über die Mobiltelefonapplikation eine vorgegebene Instruktion an ein Kurznachrichtensteuergerät gesendet wird, wobei das Kurznachrichtensteuergerät die empfangenen Instruktionen zu einem Fahrzeugsteuergerät weiterleitet, das eine korrespondierende Funktionsvorrichtung zur Ausführung der Instruktion steuert.

Die CN 111 405 041 A beschreibt ein Fahrzeugsteuerungsverfahren unter Verwendung einer Social Media Schnittstelle.

Nachteilig bei bekannten Vorrichtungen und Verfahren ist es, dass für eine Kommunikation mit dem Kraftfahrzeug ein Benutzer eine spezielle, vom Hersteller bereitgestellte, Applikation benötigt, die zunächst auf seinem mobilen Endgerät installiert werden muss. Auch muss der Benutzer die Applikation und deren Funktionsweise erlernen. So muss er sich beispielsweise in einer Menüstruktur einarbeiten, bevor er die Applikation effektiv nutzen kann. Der Erfindung liegt die Aufgabe zugrunde, eine Kommunikation mit einem Kraftfahrzeug zu erleichtern.

Diese Aufgabe wird durch die unabhängigen Patentansprüche gelöst. Vorteilhafte Weiterbildungen der Erfindung sind in den abhängigen Patentansprüchen, der folgenden Beschreibung sowie den Figuren offenbart.

Die Erfindung basiert auf dem Grundgedanken, dass vorhandene Social-Media-Applikationen, in denen sich ein Benutzer auskennt, dafür genutzt werden, um die Kommunikation, insbesondere eine Steuerung und Abfrage von Fahrzeugparametern, zu ermöglichen. Vorzugsweise ist vorgesehen, dass dafür der Benutzer keine festen Kommandos und Instruktionen lernen muss, sondern der Befehl aus einer gesendeten Nachricht extrahiert werden kann.

Durch die Erfindung ist ein Verfahren zur Kommunikation mit einem Kraftfahrzeug bereitgestellt. Das Verfahren umfasst als Schritt a) ein Bereitstellen zumindest einer Social-Media-Schnittstelle zur Kommunikation mit dem Kraftfahrzeug auf einem vorgegebenen Fahrzeugflottenserver, wobei durch die Social-Media-Schnittstelle eine Kommunikation über eine Social-Media-Applikation bereitgestellt wird. Der Fahrzeugflottenserver ist hierbei vorzugsweise ein fahrzeugexterner Server, der beispielsweise von einem Hersteller des Fahrzeugs betrieben werden kann. Insbesondere kann aber die Social-Media-Applikation von einem fahrzeugfremden Hersteller bereitgestellt sein. Die Social-Media-Applikation kann vorzugsweise nach Wünschen und Vorlieben des Benutzers frei gewählt werden. Hierbei sind vorzugsweise Social-Media-Applikationen zu verwenden, mittels denen ein Nachrichtenaustausch, also eine Kommunikation zwischen verschiedenen Benutzern stattfinden kann. Das bedeutet, dass zumindest Textnachrichten und/oder Sprachnachrichten gesendet werden können. Alternativ kann auch vorgesehen sein, dass Videonachrichten zur Kommunikation versendet werden können. Mit einer Social-Media-Schnittstelle, die auf dem Fahrzeugflottenserver bereitgestellt wird, ist eine Schnittstelle, insbesondere eine Softwareschnittstelle, gemeint, die Nachrichten über die Social-Media-Applikation empfangen und weiteren Programmen bereitstellen kann. Vorzugsweise kann die Social-Media-Schnittstelle als Programmelement auf dem Fahrzeugflottenserverausgebildet sein, wobei das Programmelement ein Empfangsgerät, beispielsweise ein weiteres mobiles Endgerät, das die Social-Media-Applikation aufweist, nachbilden kann. Besonders bevorzugt kann in einem vorhergehenden Schritt ein Social-Media-Profil des Kraftfahrzeugs erstellt werden, das heißt ein Profil für das Kraftfahrzeug bei einem Anbieter der Social-Media-Applikation.

In einem weiteren Schritt umfasst das Verfahren als Schritt b) ein Empfangen einer Nachricht eines mobilen Endgerätes eines Benutzers durch die Social-Media-Schnittstelle des vorgegebenen Fahrzeugflottenservers mittels der Social-Media-Applikation. So kann beispielsweise von dem mobilen Endgerät die Social-Media-Applikation genutzt werden, um eine Nachricht zu verfassen und über die Social-Media-Applikation an die Social-Media-Schnittstelle des Fahrzeugflottenservers zu senden, wobei die Social-Media-Schnittstelle dem Kraftfahrzeug zugeordnet sein kann. Das heißt, dass vorzugsweise die Social-Media-Schnittstelle eine eindeutige Zuordnung zum Kraftfahrzeug aufweisen kann, beispielsweise über eine Fahrzeugidentifikationsnummer. Somit ist das Kraftfahrzeug mit dem Anbieter der Social-Media-Applikation verknüpft. Alternativ kann die Social-Media-Schnittstelle auch nicht direkt mit dem Kraftfahrzeug verknüpft sein, sondern nur mit einem Hersteller des Kraftfahrzeugs. In diesem Fall kann eine Zuordnung zu dem passenden Kraftfahrzeug beispielsweise anhand einer Identifikation des mobilen Endgerätes durchgeführt werden von dem die Nachricht stammt. Als mobiles Endgerät können hierbei beispielsweise Mobiltelefone, insbesondere Smartphones, Tablet-PCs oder Smartwatches verwendet werden.

Anschließend wird in einem Schritt c) ein Fahrzeugfunktionsaufruf aus der empfangenen Nachricht durch ein Interpretationsprogramm ermittelt, wobei eine Semantik der Nachricht durch das Interpretationsprogramm zur Ermittlung des Fahrzeugfunktionsaufrufs interpretiert wird. Ein Fahrzeugfunktionsaufruf kann hierbei beispielsweise ein Abrufen und/oder Einstellen eines Fahrzeugparameters sein, wobei ein Fahrzeugparameter zum Beispiel ein Ergebnis einer Sensormessung des Kraftfahrzeugs sein kann, wie beispielsweise von Strom-/Spannungssensoren, von Temperatursensoren und Helligkeitssensoren. Alternativ oder zusätzlich kann mittels des Fahrzeugfunktionsaufrufs auch ein Fahrzeugparameter gesetzt beziehungsweise verstellt werden. Beispielsweise kann mittels des Fahrzeugfunktionsaufrufs eine Innentemperatur des Kraftfahrzeugs eingestellt werden. Folglich ist der Fahrzeugfunktionsaufruf eine Instruktion beziehungsweise ein Steuerbefehl zur Abfrage und/oder Einstellung eines Fahrzeugparameters.

Durch das Interpretationsprogramm muss jedoch nicht der exakte Steuerbefehl, das heißt die richtige Formulierung des Fahrzeugfunktionsaufrufs, in der empfangenen Nachricht vorliegen, sondern das Interpretationsprogramm kann eine Semantik der Nachricht analysieren, um aus der Nachricht den Fahrzeugfunktionsaufruf zu extrahieren. Hierzu kann das Interpretationsprogramm beispielsweise die Nachrichten auf Satz- beziehungsweise Wortmuster analysieren und mit ähnlichen Mustern vergleichen, die beispielsweise in einer Datenbank vorgegeben sein können. Wird eine Übereinstimmung gefunden, kann so festgestellt werden, wie die Nachricht zu interpretieren ist. Insbesondere kann festgestellt werden, welcher Fahrzeugfunktionsaufruf in der Nachricht vorhanden ist oder ob überhaupt ein Fahrzeugfunktionsaufruf in der Nachricht ist, wobei das Verfahren abgebrochen werden kann, falls kein Fahrzeugfunktionsaufruf gefunden wird.

Nach Ermitteln des Fahrzeugfunktionsaufrufs umfasst das Verfahren in Schritt d) ein Durchführen des ermittelten Fahrzeugfunktionsaufrufs in dem Kraftfahrzeug, wobei der Fahrzeugflottenserver über eine Fahrzeugschnittstelle zur Durchführung des Funktionsaufrufs auf das Kraftfahrzeug zugreift und als Schritt e) ein Senden einer Antwortnachricht von dem Fahrzeugflottenserver an das mobile Endgerät mittels der Social-Media-Applikation, falls der Fahrzeugflottenserver als Antwort auf den Fahrzeugfunktionsaufruf ein Fahrzeugparameter von dem Kraftfahrzeug erhält, wobei die Antwortnachricht in Abhängigkeit des erhaltenen Fahrzeugparameters generiert wird. Mit anderen Worten wird nach dem Ermitteln des Fahrzeugfunktionsaufrufs das Kraftfahrzeug zum Durchführen der dazugehörigen Fahrzeugfunktion durch den Fahrzeugflottenserver angesteuert. Das heißt ein Fahrzeugparameter kann abgerufen oder eingestellt werden. Vorzugsweise kann dafür der Fahrzeugflottenserver eine Fahrzeugschnittstelle aufweisen, die den Fahrzeugfunktionsaufruf an das Kraftfahrzeug, beispielsweise an ein Steuergerät des Kraftfahrzeugs, sendet. Nachdem der Fahrzeugfunktionsaufruf durchgeführt wurde kann geprüft werden, ob von dem Kraftfahrzeug ein Fahrzeugparameter als Antwort auf den Fahrzeugfunktionsaufruf an den Fahrzeugflottenserver erfolgt. Falls nicht, kann das Verfahren an dieser Stelle enden. Beispielsweise, falls nur ein Fahrzeugparameter eingestellt werden soll aber keine Rückmeldung gewünscht ist. Falls jedoch ein Fahrzeugparameter erhalten wird, kann der Fahrzeugflottenserver nach Erhalten des Fahrzeugparameters eine Antwortnachricht erstellen und mittels der Social-Media-Applikation an das mobile Endgerät senden. Vorzugsweise ist die Antwortnachricht hierbei ein Text oder eine Sprachnachricht, die von dem Fahrzeugflottenserver generiert wird und in die der Fahrzeugparameter eingefügt beziehungsweise eingebettet wird. Das bedeutet, dass nicht nur der Fahrzeugparameter als einzelner Zahlenwert als Antwortnachricht versendet wird, sondern dieser in einen vollständigen Antwortsatz eingebaut sein kann. So kann die initiale Nachricht von dem mobilen Endgerät an das Social-Media-Profil des Kraftfahrzeugs beispielsweise sein, dass gefragt wird: "Wie voll ist die Batterie?". So kann durch das Interpretationsprogramm festgestellt werden, dass durch den Fahrzeugfunktionsaufruf eine Abfrage des "State of Charge" der Fahrzeugbatterie durchgeführt werden soll. Nach Abrufen dieses Fahrzeugparameters, also des Ladezustands der Batterie, kann als Antwortnachricht beispielsweise automatisiert der Satz erstellt werden, dass "die Fahrzeugbatterie zu 87 Prozent geladen ist". Die Antwortnachricht kann beispielsweise mittels eines Chatbots in dem Fahrzeugflottenserver generiert werden, indem beispielsweise von einer Datenbank in Abhängigkeit des abgerufenen Fahrzeugparameters die Antwortnachricht generiert wird.

Durch die Erfindung ergibt sich der Vorteil, dass ein Benutzer keine zusätzliche Applikation auf seinem mobilen Endgerät installieren muss und der Benutzer mit dem Kraftfahrzeug durch sein gewohntes Medium kommunizieren kann. Somit muss der Benutzer nicht die Bedienung einer neuen Applikation erlernen und er kann mit seinem Kraftfahrzeug kommunizieren, ohne seine bevorzugte Applikation verlassen zu müssen. Folglich kann ein Benutzer mit dem Kraftfahrzeug wie mit einem sozialen Kontakt kommunizieren, da das Medium das gleiche ist und frei geschrieben werden kann. Auch kann in einer Kontaktliste des Benutzers das Kraftfahrzeug wie eine Person aufgeführt werden, was eine Erreichbarkeit des Kraftfahrzeugs erleichtert. Insgesamt kann somit eine Kommunikation mit dem Kraftfahrzeug erleichtert werden.

Die Erfindung umfasst auch Ausführungsformen, durch die sich zusätzliche Vorteile ergeben.

Eine Ausführungsform sieht vor, dass die Nachricht als Textnachricht und/oder als Sprachnachricht und/oder als Videonachricht bereitgestellt wird. Mit anderen Worten kann die Nachricht, die vom mobilen Endgerät an den Fahrzeugflottenserver mittels der Social-Media-Applikation gesendet wird, als Textnachricht und/oder als Sprachnachricht gesendet werden. So kann das Interpretationsprogramm beispielsweise Texte der Textnachricht oder ein Audiosignal der Sprachnachricht auf Vorliegen des Fahrzeugfunktionsaufrufs analysieren. Alternativ kann auch ein Video als Nachricht gesendet werden, wobei das Video, insbesondere eine Tonspur des Videos, durch das Interpretationsprogramm analysiert werden kann. Durch diese Ausführungsform kann die Kommunikation mit dem Kraftfahrzeug mittels klassischer Social-Media-Applikation durchgeführt werden, was besonders einfach und intuitiv für einen Benutzer ist.

Erfindungsgemäß umfasst die Antwortnachricht in Abhängigkeit des erhaltenen Fahrzeugparameters ferner eine Einstellungsanfrage zur Einstellung des Fahrzeugparameters, wobei von dem Fahrzeugflottenserver eine Rückantwort über die Social-Media-Applikation erwartet wird, wobei der Fahrzeugflottenserver den Fahrzeugfunktionsaufruf zur Einstellung des Fahrzeugparameters an das Kraftfahrzeug sendet, falls durch das Interpretationsprogramm eine Einstellungsabsicht aus der Rückantwort interpretiert wird. Mit anderen Worten kann als Antwortnachricht nicht nur der Fahrzeugparameter an das mobile Endgerät gesendet werden, sondern auch eine Einstellungsabfrage, ob der Fahrzeugparameter geändert werden soll. Die Einstellungsanfrage kann hierbei von dem erhaltenen Fahrzeugparameter abhängen, beispielsweise falls der Fahrzeugparameter außerhalb eines vorgegebenen Normbereichs liegt. So kann der Fahrzeugparameter beispielsweise eine Temperatur umfassen, die in dem Kraftfahrzeug vorliegt. Ist die Temperatur unter oder über einem vorgegebenen Schwellenwert, kann die Einstellungsanfrage beispielsweise sein, ob eine Heizung und/oder eine Klimaanlage aktiviert werden soll. Danach kann auf eine Rückantwort gewartet werden, insbesondere für eine vorgegebene Zeit, ob die Einstellung vorgenommen werden soll oder nicht. Beispielsweise kann nach Senden der Einstellungsanfrage an das mobile Endgerät für eine Zeit von fünf Minuten abgewartet werden, ob eine Bestätigung erfolgt. Wurde dies bestätigt, kann dann der Fahrzeugflottenserver einen Fahrzeugfunktionsaufruf generieren und an das Kraftfahrzeug senden, sodass der Fahrzeugparameter entsprechend eingestellt werden kann. Durch diese Ausführungsform ergibt sich der Vorteil, dass das Kraftfahrzeug, insbesondere Funktionen des Kraftfahrzeugs, intuitiv und einfach abgerufen und gesteuert werden können, da die Steuerung der Fahrzeugfunktionen in Form eines Dialogs über die Social-Media-Applikation durchgeführt wird.

Vorzugsweise ist vorgesehen, dass die Antwortnachricht des Fahrzeugflottenservers von einem Chatbot generiert wird. Der Chatbot kann vorzugsweise ein Teil eines Funktionsprogramms auf dem Fahrzeugflottenserver sein, wobei das Funktionsprogramm die Fahrzeugfunktionsaufrufe in Steuerbefehle für das Kraftfahrzeug umwandeln kann und/oder Fahrzeugparameter aus dem Kraftfahrzeug erhalten kann. Mit Chatbot ist ein textbasiertes Dialogsystem gemeint, welches Textein- und -ausgaben auswerten und selber erstellen kann und hierbei auf künstliche Art und Weise eine Person imitiert. Hierdurch ergibt sich der Vorteil, dass das Kraftfahrzeug weniger als technischer Gegenstand, sondern mehr als Persönlichkeit wahrgenommen wird, was zu einer engeren Bindung des Benutzers an das Kraftfahrzeug führt. Des Weiteren kann so eine Kommunikation mit dem Kraftfahrzeug erleichtert werden. Besonders bevorzugt ist vorgesehen, dass das Interpretationsprogramm einen selbstlernenden Algorithmus umfasst, der eine Semantik der Nachrichten von dem mobilen Endgerät zur Ermittlung des Fahrzeugfunktionsaufrufs erkennt. Mit anderen Worten kann das Interpretationsprogramm auf einer künstlichen Intelligenz beruhen, die Nachrichten des Benutzers mitlernen kann und sich so an einen Sprach- und Schreibstil des Benutzers anpassen kann. Somit können verbessert Fahrzeugfunktionsanfragen aus den Nachrichten erkannt werden. Der selbstlernende Algorithmus wird auf einem Funktionsprogramm des Fahrzeugflottenservers durchgeführt und erkennt ein Verhaltensmuster des Benutzers, wodurch automatisiert Einstellungsanfragen an das mobile Endgerät des Benutzers erstellt werden.

So kann beispielsweise durch den selbstlernenden Algorithmus bekannt sein, dass ein Benutzer das Kraftfahrzeug morgens immer um eine bestimmte Uhrzeit verwendet. Aus dieser Information kann beispielsweise zu einem Zeitpunkt vor der Benutzung des Kraftfahrzeugs eine Einstellungsanfrage generiert werden, die an das mobile Endgerät des Benutzers gesendet wird, zum Beispiel ob eine Standheizung aktiviert werden soll.

Eine weitere Ausführungsform sieht vor, dass durch den Fahrzeugflottenserver ermittelt wird, welche Fahrzeugfunktionen von dem Kraftfahrzeug bereitgestellt werden, wobei eine Fehlernachricht von dem Fehlerflottenserver an das mobile Endgerät gesendet wird, falls als Fahrzeugfunktionsaufruf eine nicht vorhandene Fahrzeugfunktion ermittelt wird. Mit anderen Worten kann ermittelt werden, beispielsweise nach einer Erstellung eines Social-Media-Profils für das Kraftfahrzeug, welche Fahrzeugfunktionen überhaupt in dem Kraftfahrzeug vorhanden sind. So kann beispielsweise das Kraftfahrzeug einen Verbrennungsmotor aufweisen und ein Fahrzeugfunktionsaufruf bezüglich einer Traktionsbatteriekapazität kann entsprechend mit der Fehlernachricht beantwortet werden. Damit der Fahrzeugflottenserver feststellt, welche Fahrzeugfunktionen im Kraftfahrzeug vorhanden sind, kann eine Fahrzeugausstattung, beispielsweise anhand der Fahrzeugidentifikationsnummer, von einer Datenbank abgefragt werden, in der die Ausstattungen gespeichert sein können. Alternativ kann der Fahrzeugflottenserver auch ein zentrales Steuergerät des Kraftfahrzeugs ansteuern, das mitteilen kann, welche Fahrzeugfunktionen im Kraftfahrzeug vorliegen. Durch diese Ausführungsform ergibt sich der Vorteil, dass ein Datenverkehr zu dem Kraftfahrzeug begrenzt werden kann, da nicht vorhandene Fahrzeugfunktionen gar nicht erst durch den Fahrzeugflottenserver angefragt werden.

Eine weitere Ausführungsform sieht vor, dass das Verfahren vor Schritt b) ferner folgende Schritte umfasst: Erstellen eines Social-Media-Profils für das Kraftfahrzeug und verknüpfen des Social-Media-Profils mit der Social-Media-Schnittstelle des Fahrzeugflottenservers, wobei beim Verknüpfen des Social-Media-Profils mit der Social-Media-Schnittstelle eine Berechtigungsanfrage an das Kraftfahrzeug gesendet wird, wobei die Verknüpfung nur dann durchgeführt wird, falls eine Freigabe der Berechtigungsanfrage aus dem Kraftfahrzeug erfolgt. Mit anderen Worten kann zur Authentifizierung, dass es sich bei dem Ersteller des Social-Media-Profils um den Besitzer des Kraftfahrzeugs handelt, eine Berechtigungsanfrage an das Kraftfahrzeug, beispielsweise an ein Infotainmentsystem des Kraftfahrzeugs, gesendet werden. Erst nach Bestätigung dieser Berechtigungsanfrage kann das Social-Media-Profil mit der Social-Media-Schnittstelle, die einen Zugriff auf das Kraftfahrzeug ermöglicht, verknüpft werden. Hierdurch ergibt sich der Vorteil, dass eine Sicherheit erhöht werden kann.

Eine weitere Ausführungsform sieht vor, dass mehrere Social-Media-Schnittstellen unterschiedlicher Anbieter für das Kraftfahrzeug auf dem Fahrzeugflottenserver bereitgestellt werden. So sind der Fahrzeugflottenserver und das Kraftfahrzeug nicht auf eine Social-Media-Applikation eines Anbieters limitiert, sondern der Fahrzeugflottenserver kann Schnittstellen für mehrere unterschiedliche Anbieter aufweisen. So können beispielsweise auch mehrere Personen, die sich das Kraftfahrzeug teilen, die aber unterschiedliche Social-Media-Applikationen verwenden, auf die durch das Verfahren bereitgestellte Funktionalität zurückgreifen.

Vorzugsweise ist vorgesehen, dass bei Empfangen der Nachricht in Schritt b) ferner geprüft wird, ob ein Sender der Nachricht eine Berechtigung zur Kommunikation aufweist, wobei die nachfolgenden Schritte des Verfahrens nur dann durchgeführt werden, falls der Sender die Berechtigung aufweist. Mit anderen Worten können mobile Endgeräte zur Kommunikation mit dem Kraftfahrzeug freigeschaltet oder blockiert werden. So können beispielsweise mehrere Personen, die eine gleiche Social-Media-Applikation benutzen und einen Kontakt zu dem Social-Media-Profil des Kraftfahrzeugs aufweisen, Nachrichten an das Social-Media-Profil des Kraftfahrzeugs senden, wobei nur diejenigen Nachrichten weiterverarbeitet werden, für die eine Berechtigung vorliegt. Alternativ kann bei einer Nachricht von einem unbefugten Benutzer durch den Fahrzeugflottenserver eine Berechtigungsanfrage generiert werden, die an einen berechtigten Benutzer, insbesondere einen Besitzer des Kraftfahrzeugs, gesendet werden kann. Dieser kann dann die Berechtigung zur Kommunikation mit dem Kraftfahrzeug erteilen oder verweigern. Hierdurch ergibt sich zum einen der Vorteil, dass eine Sicherheit erhöht werden kann und zum anderen, dass beispielsweise mehrere Personen, die das Kraftfahrzeug und auch eine gleiche Social-Media-Applikation nutzen, auf die Funktionalität des Verfahrens zurückgreifen können.

Ein weiterer Aspekt der Erfindung betrifft ein System mit zumindest einem mobilen Endgerät, zumindest einem Kraftfahrzeug und einem Fahrzeugflottenserver, wobei der Fahrzeugflottenserver dazu ausgebildet ist, ein Verfahren nach einem der vorhergehenden Ausführungsformen durchzuführen. Das Kraftfahrzeug ist bevorzugt als Kraftwagen, insbesondere als Personenkraftwagen oder Lastkraftwagen, oder als Personenbus oder Motorrad ausgestaltet. Durch diesen Aspekt der Erfindung ergeben sich gleiche Vorteile und Variationsmöglichkeiten wie bei dem Verfahren.

Ein nicht beanspruchter Gegenstand umfasst die Steuervorrichtung für das System. Die Steuervorrichtung kann eine Datenverarbeitungsvorrichtung oder eine Prozessoreinrichtung aufweisen, die dazu eingerichtet ist, eine Ausführungsform des erfindungsgemäßen Verfahrens durchzuführen. Die Prozessoreinrichtung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Des Weiteren kann die Prozessoreinrichtung Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein.

Zu der Erfindung gehören auch Weiterbildungen des erfindungsgemäßen Systems, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Systems hier nicht noch einmal beschrieben.

Die Erfindung umfasst auch die Kombinationen der Merkmale der beschriebenen Ausführungsformen. Die Erfindung umfasst also auch Realisierungen, die jeweils eine Kombination der Merkmale mehrerer der beschriebenen Ausführungsformen aufweisen, sofern die Ausführungsformen nicht als sich gegenseitig ausschließend beschrieben wurden.

Im Folgenden sind Ausführungsbeispiele der Erfindung beschrieben. Hierzu zeigt:
- Fig. 1: ein schematisches System zur Kommunikation mit einem Kraftfahrzeug gemäß einer beispielhaften Ausführungsform;
- Fig. 2: ein schematisches Verfahrensdiagramm zur Kommunikation mit einem Kraftfahrzeug gemäß einer beispielhaften Ausführungsform.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar. Der Schutzumfang der Erfindung wird jedoch durch die Ansprüche definiert.

In den Figuren bezeichnen gleiche Bezugszeichen jeweils funktionsgleiche Elemente.

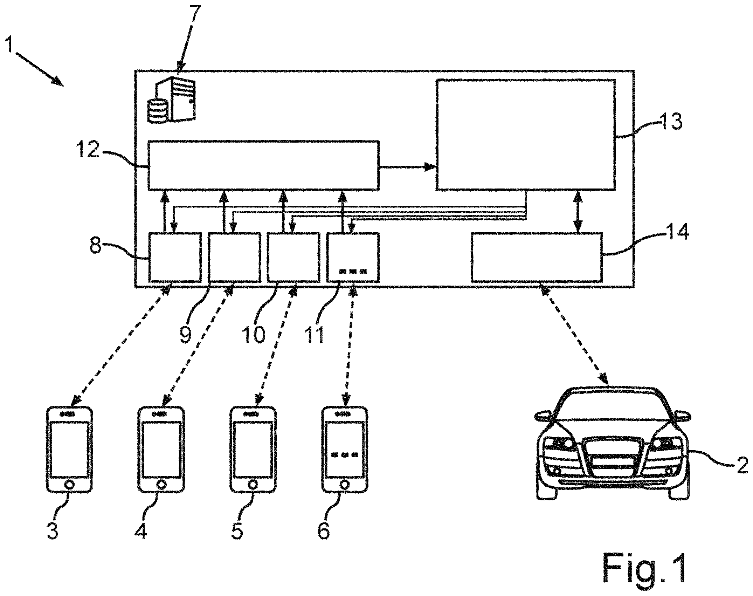

In Fig. 1 ist ein schematisches System 1 zur Kommunikation mit einem Kraftfahrzeug 2 gemäß einer beispielhaften Ausführungsform dargestellt. Neben dem Kraftfahrzeug 2 kann das System 1 zumindest ein mobiles Endgerät 3, 4, 5, 6 und einen Fahrzeugflottenserver 7 aufweisen. Alternativ können auch mehrere Server, insbesondere eine Rechnerwolke, verwendet werden, wobei beispielsweise verschiedene Funktionsschritte des auf die Server verteilt werden können.

Die mobilen Endgeräte 3, 4, 5, 6 können beispielsweise als Smartphone und/oder als Tablet-PC ausgebildet sein, wobei jeweils unterschiedliche Social-Media-Applikationen auf den mobilen Endgeräten 3, 4, 5, 6 betreiben werden können. So kann beispielsweise das mobile Endgerät 3 eine andere Social-Media-Applikation als das mobile Endgerät 4 aufweisen. Auf dem Fahrzeugflottenserver 7 können vorzugsweise Social-Media-Schnittstellen 8, 9, 10, 11 für die entsprechenden Social-Media-Applikationen bereitgestellt sein

Zur Kommunikation mit dem Kraftfahrzeug 2, zum Beispiel um einen Sensorwert abzufragen oder eine Fahrzeugfunktion zu steuern, kann vorgesehen sein, das für das Kraftfahrzeug ein Social-Media-Profil bei einem Anbieter der Social-Media-Applikation erstellt wurde. An dieses Social-Media-Profil des Kraftfahrzeugs 2 kann dann eine Nachricht, beispielsweise von dem mobilen Endgerät 3, gesendet werden, wobei die Nachricht von der Social-Media-Schnittstelle 8 des Fahrzeugflottenservers 7, die passend zu der Social-Media-Applikation des mobilen Endgerätes 3 bereitgestellt wird, empfangen wird. Die empfangene Nachricht kann anschließend durch ein Interpretationsprogramm 12 analysiert werden, wobei eine Semantik der Nachricht zur Ermittlung eines Fahrzeugfunktionsaufrufs interpretiert wird. Der Fahrzeugfunktionsaufruf kann hierbei ein Befehl zum Abruf des Sensorwerts oder zur Steuerung einer anderen Fahrzeugfunktion sein, wobei der Befehl jedoch nicht explizit in der Nachricht formuliert werden muss. Die Nachricht kann beispielsweise als Textnachricht und/oder als Sprachnachricht vorliegen, wobei das Interpretationsprogramm 12, das vorzugsweise auf einem selbstlernenden Algorithmus basiert, den Wortlaut und/oder die Satzstellung der Nachricht daraufhin analysieren kann, ob der Befehl zum Abruf des Sensorwerts aus der Nachricht extrahiert werden kann. Das heißt, dass das Interpretationsprogramm 12 die Intention hinter der Nachricht bestimmt.

Wird ein solcher Fahrzeugfunktionsaufruf aus der empfangenen Nachricht durch das Interpretationsprogramm 12 ermittelt, kann anschließend ein Funktionsprogramm 13 des Fahrzeugflottenservers 7 den Fahrzeugfunktionsaufruf in ein Steuersignal umsetzen, das logische Anteile einer Interaktion mit dem Kraftfahrzeug 2 umfasst. Mit anderen Worten kann das Funktionsprogramm 13 den erkannten Fahrzeugfunktionsaufruf derart in ein Steuersignal konvertiert, dass damit eine Funktion des Kraftfahrzeugs 2, insbesondere ein Sensor des Kraftfahrzeugs 2, angesteuert werden kann. Anschließend kann das Steuersignal mittels einer Fahrzeugschnittstelle 14 an das entsprechende Kraftfahrzeug 2 gesendet werden. Vorzugsweise kann dann ein Fahrzeugparameter in dem Kraftfahrzeug ermittelt oder eingestellt werden, beispielsweise indem der Sensor des Kraftfahrzeugs 2 von dem Steuersignal getriggert wird und den Sensorwert misst. Der so gemessene Fahrzeugparameter kann anschließend wieder an den Fahrzeugflottenserver 7 übermittelt werden, wobei der Fahrzeugparameter vom Fahrzeugflottenserver 7 mittels der Fahrzeugschnittstelle 14 empfangen wird.

In dem Fahrzeugflottenserver 7 kann beispielsweise das Funktionsprogramm 13 mittels des empfangenen Fahrzeugparameters eine Antwortnachricht generieren, wobei die Antwortnachricht mittels der Social-Media-Applikation zurück an das mobile Endgerät 3 gesendet werden kann. Zur Erzeugung der Antwortnachricht kann vorzugsweise ein Chatbot verwendet werden, der den Fahrzeugparameter in einen Text einfügt, so dass der Eindruck entsteht, dass die Antwortnachricht von einer realen Person stammt. Vorzugsweise kann zusätzlich vorgesehen sein, dass die Antwortnachricht in Abhängigkeit des abgerufenen Fahrzeugparameters auch eine Einstellungsanfrage zur Einstellung des Fahrzeugparameters umfasst. Das bedeutet, dass der Fahrzeugparameter nicht nur abgefragt, sondern auch eingestellt werden kann. Hierzu kann der Fahrzeugflottenserver 7 beispielsweise nach Senden der Antwortnachricht um eine vorgegebene Zeit auf eine Rückantwort warten, die als Einstellungsabsicht des Fahrzeugparameters interpretiert werden kann.

Beispielsweise kann ein Benutzer über seine Social-Media-Applikation des mobilen Endgeräts 3 an das Kraftfahrzeug 2 schreiben: "Wie warm ist es?". Die Nachricht wird den der Social-Media-Schnittstelle 8, 9, 10, 11 des Fahrzeugflottenservers 7 empfangen und das Interpretationsprogramm 12 interpretiert den Inhalt der Nachricht. Beispielsweise kann als Inhalt ein Fahrzeugfunktionsaufruf mit dem Inhalt "Abfrage der Außentemperatur" erkannt werden. Diese kann dann an das Funktionsprogramm 13 des Fahrzeugflottenservers 7 weitergegeben werden. Das Funktionsprogramm 13 kann dann über die Fahrzeugschnittstelle 14 auf das Kraftfahrzeug 2 zugreifen und den Fahrzeugparameter der Außentemperatur abfragen. Anhand des empfangenen Wertes, beispielsweise 31 Grad Celsius, wird in dem Funktionsprogramm 13 entschieden, dass dem Benutzer eine Klimatisierung des Kraftfahrzeugs 2 angeboten werden kann. Es kann eine Antwortnachricht mit einer zusätzlichen Einstellungsanfrage erstellt werden, beispielsweise mit der Textnachricht: "Die Außentemperatur beträgt 31 Grad Celsius. Soll ich die Klimaanlage einschalten?". Diese Antwortnachricht kann dann über die Social-Media-Applikation zurück an das mobile Endgerät 3 gesendet werden und es kann eine Rückantwort abgewartet werden. Antwortet der Benutzer beispielsweise mit "Klar!", kann diese Nachricht wieder über den zuvor beschriebenen Wert eingelesen und interpretiert werden, wobei das Interpretationsprogramm 12 eine Zustimmung der Einstellungsanfrage aus der Nachricht erkennt. Das Funktionsprogramm 13 kann dann über die Fahrzeugschnittstelle 14 eine Klimatisierung des Kraftfahrzeugs 2 starten. So kann ein Benutzer auf gewohntem Wege mit seinem Fahrzeug kommunizieren beziehungsweise chatten, ohne dafür feste Kommandos lernen zu müssen.

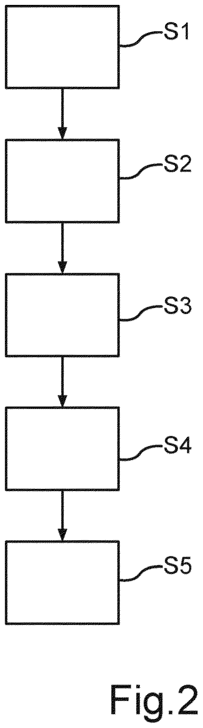

In Fig. 2 ist ein schematisches Verfahrensdiagramm zur Kommunikation mit einem Kraftfahrzeug 2 gemäß einer beispielhaften Ausführungsform dargestellt. Das hier gezeigte Verfahren kann vorzugsweise von einem Fahrzeugflottenserver 7 durchgeführt werden. In einem Schritt S1 kann zumindest eine Social-Media-Schnittstelle 8 zur Kommunikation mit dem Kraftfahrzeug bereitgestellt werden. Bevorzugt kann außerdem ein Social-Media-Profil für das Kraftfahrzeug 2 angelegt werden, beispielsweise bei einem Anbieter für Social-Media-Applikationen. Durch die Social-Media-Schnittstelle 8 wird eine Kommunikation über eine Social-Media-Applikation, die vorzugsweise von einem Drittanbieter ist und mittels der über Text und/oder Sprachnachrichten kommuniziert werden kann, bereitgestellt.

In einem Schritt S2 wird über diese Social-Media-Applikation eine Nachricht des mobilen Endgeräts 3 von der Social-Media-Schnittstelle 8 des Fahrzeugflottenservers 7 empfangen. Anschließend kann in einem Schritt S3 ein Fahrzeugfunktionsaufruf aus der empfangenen Nachricht durch ein Interpretationsprogramm 12 ermittelt werden, wobei eine Semantik der Nachricht durch das Interpretationsprogramm 12 zur Ermittlung des Fahrzeugfunktionsaufrufs interpretiert wird. Wird ein solcher Fahrzeugfunktionsaufruf aus der empfangenen Nachricht ermittelt, kann in einem Schritt S4 der Fahrzeugfunktionsaufruf in dem Kraftfahrzeug (2) durchgeführt werden, zum Beispiel kann zumindest ein Fahrzeugparameter, der zu dem ermittelten Fahrzeugfunktionsaufruf gehört, von dem Kraftfahrzeug 2 abgerufen oder eingestellt werden. Schließlich kann in einem Schritt S5 eine Antwortnachricht von dem Fahrzeugflottenserver 7 an das mobile Endgerät 3 mittels der Social-Media-Applikation gesendet werden, falls der Fahrzeugflottenserver (7) als Antwort auf den Fahrzeugfunktionsaufruf einen Fahrzeugparameter von dem Kraftfahrzeug (2) erhält, wobei die Antwortnachricht in Abhängigkeit des erhaltenen Fahrzeugparameters generiert wird und beispielsweise von einem Chatbot in einer Textnachricht verpackt wird. Die Schritte S2 bis S5 können vorzugsweise wiederholt durchgeführt werden, also jedes Mal, wenn eine Nachricht vom Fahrzeugflottenserver (7) empfangen wird.

Insgesamt zeigen die Beispiele, wie durch die Erfindung Social-Media-Profile für Kraftfahrzeuge bereitgestellt werden können.

## Patentansprüche

1. Verfahren zur Kommunikation mit einem Kraftfahrzeug (2), mit den Schritten:
a) Bereitstellen (S1) zumindest einer Social-Media-Schnittstelle (8, 9, 10, 11) zur Kommunikation mit dem Kraftfahrzeug (2) auf einem vorgegebenen Fahrzeugflottenserver (7), wobei durch die Social-Media-Schnittstelle (8, 9, 10, 11) eine Kommunikation über eine Social-Media-Applikation bereitgestellt wird;
b) Empfangen (S2) einer Nachricht eines mobilen Endgerätes (3, 4, 5, 6) durch die Social-Media-Schnittstelle des vorgegebenen Fahrzeugflottenservers (7) mittels der Social-Media-Applikation;
c) Ermitteln (S3) eines Fahrzeugfunktionsaufrufs aus der empfangenen Nachricht durch ein Interpretationsprogramm (12), wobei eine Semantik der Nachricht durch das Interpretationsprogramm (12) zur Ermittlung des Fahrzeugfunktionsaufrufs interpretiert wird;
d) Durchführen (S4) des ermittelten Fahrzeugfunktionsaufrufs in dem Kraftfahrzeug (2), wobei der Fahrzeugflottenserver (7) über eine Fahrzeugschnittstelle (14) zur Durchführung des Funktionsaufrufs auf das Kraftfahrzeug (2) zugreift;;
e) Senden (S5) einer Antwortnachricht von dem Fahrzeugflottenserver (7) an das mobile Endgerät (3, 4, 5, 6) mittels der Social-Media-Applikation, falls der Fahrzeugflottenserver (7) als Antwort auf den Fahrzeugfunktionsaufruf einen Fahrzeugparameter von dem Kraftfahrzeug (2) erhält, wobei die Antwortnachricht in Abhängigkeit des erhaltenen Fahrzeugparameters generiert wird.

2. Verfahren nach Anspruch 1, wobei die Nachricht als Textnachricht und/oder als Sprachnachricht und/oder als Videonachricht bereitgestellt wird.

3. Verfahren nach einem der vorhergehenden Ansprüche, wobei die Antwortnachricht in Abhängigkeit des erhaltenen Fahrzeugparameters ferner eine Einstellungsanfrage zur Einstellung des Fahrzeugparameters umfasst, wobei von dem Fahrzeugflottenserver (7) eine Rückantwort über die Social-Media-Applikation erwartet wird, wobei der Fahrzeugflottenserver (7) den Fahrzeugfunktionsaufruf zur Einstellung des Fahrzeugparameters an das Kraftfahrzeug (2) sendet, falls durch das Interpretationsprogramm (12) eine Einstellungsabsicht aus der Rückantwort interpretiert wird.

4. Verfahren nach einem der vorhergehenden Ansprüche, wobei die Antwortnachricht des Fahrzeugflottenservers (7) von einem Chatbot generiert wird.

5. Verfahren nach einem der vorhergehenden Ansprüche, wobei das Interpretationsprogramm (12) einen selbstlernenden Algorithmus umfasst, der eine Semantik der Nachrichten von dem mobilen Endgerät (3, 4, 5, 6) zur Ermittlung des Fahrzeugfunktionsaufrufs erkennt.

6. Verfahren nach einem der vorhergehenden Ansprüche, wobei durch den Fahrzeugflottenserver (7) ermittelt wird, welche Fahrzeugfunktionen von dem Kraftfahrzeug (2) bereitgestellt werden, wobei eine Fehlernachricht von dem Fahrzeugflottenserver (7) an das mobile Endgerät (3, 4, 5, 6) gesendet wird, falls als Fahrzeugfunktionsaufruf eine nicht vorhandene Fahrzeugfunktion ermittelt wird.

7. Verfahren nach einem der vorhergehenden Ansprüche, wobei das Verfahren vor Schritt b) ferner folgende Schritte umfasst: Erstellen eines Social-Media-Profils für das Kraftfahrzeug (2) und Verknüpfen des Social-Media-Profils mit der Social-Media-Schnittstelle (8, 9, 10, 11) des Fahrzeugflottenservers (7), wobei beim Verknüpfen des Social-Media-Profils mit der Social-Media-Schnittstelle (8, 9, 10, 11) eine Berechtigungsanfrage an das Kraftfahrzeug (2) gesendet wird, wobei die Verknüpfung nur dann durchgeführt wird, falls eine Freigabe der Berechtigungsanfrage aus dem Kraftfahrzeug (2) erfolgt.

8. Verfahren nach einem der vorhergehenden Ansprüche, wobei mehrere Social-Media-Schnittstellen (8, 9, 10, 11) unterschiedlicher Anbieter auf dem Fahrzeugflottenserver (7) bereitgestellt werden.

9. Verfahren nach einem der vorhergehenden Ansprüche, wobei bei Empfangen der Nachricht in Schritt b) ferner geprüft wird, ob ein Sender der Nachricht eine Berechtigung zur Kommunikation aufweist, wobei die nachfolgenden Schritte des Verfahrens nur dann durchgeführt werden, falls der Sender die Berechtigung aufweist.

10. System (1) mit zumindest einem mobilen Endgerät (3, 4, 5, 6), zumindest einem Kraftfahrzeug (2) und einem Fahrzeugflottenserver (7), wobei der Fahrzeugflottenserver (7) dazu ausgebildet ist, ein Verfahren nach einem der vorhergehenden Ansprüche durchzuführen.

## Claims

1. Method for communication with a motor vehicle (2), with the steps:
a) providing (S1) at least one social media interface (8, 9, 10, 11) for communication with the motor vehicle (2) on a specified vehicle fleet server (7), wherein communication via a social media application is provided by the social media interface (8, 9, 10, 11);
b) receiving (S2) a message from a mobile terminal (3, 4, 5, 6) through the social media interface of the specified vehicle fleet server (7) by means of the social media application;
c) ascertaining (S3) a vehicle function call from the received message by an interpretation program (12), wherein the interpretation program (12) interprets the semantics of the message to ascertain the vehicle function call;
d) performing (S4) the ascertained vehicle function call in the motor vehicle (2), wherein the vehicle fleet server (7) accesses the motor vehicle (2) via a vehicle interface (14) for performing the function call;
e) sending (S5) a response message from the vehicle fleet server (7) to the mobile terminal (3, 4, 5, 6) by means of the social media application, if the vehicle fleet server (7) receives a vehicle parameter from the motor vehicle (2) in response to the vehicle function call, the response message being generated as a function of the vehicle parameter received.

2. Method according to claim 1, wherein the message is provided as a text message, and/or as a voice message and/or as a video message.

3. Method according to any one of the preceding claims, wherein the response message further comprises a setting request for setting the vehicle parameter as a function of the vehicle parameter received, wherein a response is expected from the vehicle fleet server (7) via the social media application, wherein the vehicle fleet server (7) sends the vehicle function call for setting the vehicle parameter to the motor vehicle (2) if a setting intention is interpreted from the response by the interpretation program (12).

4. Method according to any one of the preceding claims, wherein the response message of the vehicle fleet server (7) is generated by a chatbot.

5. Method according to any one of the preceding claims, wherein the interpretation program (12) comprises a self-learning algorithm which recognizes the semantics of the messages from the mobile terminal (3, 4, 5, 6) to determine the vehicle function call.

6. Method according to any one of the preceding claims, wherein the vehicle fleet server (7) ascertains which vehicle functions are provided by the motor vehicle (2), wherein an error message is sent from the vehicle fleet server (7) to the mobile terminal (3, 4, 5, 6), if a non-existent vehicle function is determined as the vehicle function call.

7. Method according to any one of the preceding claims, wherein the method before step b) further comprises the following steps: creating a social media profile for the motor vehicle (2) and linking the social media profile to the social media interface (8, 9, 10, 11) of the vehicle fleet server (7), wherein an authorization request is sent to the motor vehicle (2) when the social media profile is linked to the social media interface (8, 9, 10, 11), wherein the link is only made if the authorization request is enabled by the motor vehicle (2).

8. Method according to any one of the preceding claims, wherein multiple social media interfaces (8, 9, 10, 11) of different providers are provided on the vehicle fleet server (7).

9. Method according to any one of the preceding claims, wherein on receipt of the message in step b) it is further checked whether a sender of the message has an authorization for communication, wherein the following steps of the method are only carried out if the sender has the authorization.

10. System (1) comprising at least one mobile terminal (3, 4, 5, 6), at least one motor vehicle (2) and a vehicle fleet server (7), wherein the vehicle fleet server (7) is configured to carry out a method according to any one of the preceding claims.

## Revendications

1. Procédé de communication avec un véhicule automobile (2), avec les étapes consistant à :
a) mettre à disposition (S1) au moins une interface de médias sociaux (8, 9, 10, 11) pour la communication avec le véhicule automobile (2) sur un serveur de flotte de véhicules (7) prédéterminé, dans lequel une communication est mise à disposition par l'interface de médias sociaux (8, 9, 10, 11) par l'intermédiaire d'une application de médias sociaux ;
b) recevoir (S2) un message d'un terminal mobile (3, 4, 5, 6) par l'interface de médias sociaux du serveur de flotte de véhicules (7) prédéterminé au moyen de l'application de médias sociaux ;
c) déterminer (S3) un appel de fonction de véhicule à partir du message reçu par un programme d'interprétation (12), dans lequel une sémantique du message est interprétée par le programme d'interprétation (12) pour déterminer l'appel de fonction de véhicule ;
d) exécuter (S4) l'appel de fonction de véhicule déterminé dans le véhicule automobile (2), dans lequel le serveur de flotte de véhicules (7) accède au véhicule automobile (2) par l'intermédiaire d'une interface de véhicule (14) pour exécuter l'appel de fonction ;
e) envoyer (S5) un message de réponse du serveur de flotte de véhicules (7) au terminal mobile (3, 4, 5, 6) au moyen de l'application de médias sociaux si le serveur de flotte de véhicules (7) reçoit un paramètre de véhicule du véhicule automobile (2) en tant que réponse à l'appel de fonction de véhicule, dans lequel le message de réponse est généré en fonction du paramètre de véhicule reçu.

2. Procédé selon la revendication 1, dans lequel le message est fourni en tant que message texte et/ou en tant que message vocal et/ou en tant que message vidéo.

3. Procédé selon l'une quelconque des revendications précédentes, dans lequel le message de réponse comprend en outre, en fonction du paramètre de véhicule reçu, une demande de réglage pour le réglage du paramètre de véhicule, dans lequel une réponse est attendue du serveur de flotte de véhicules (7) par l'intermédiaire de l'application de médias sociaux, dans lequel le serveur de flotte de véhicules (7) envoie l'appel de fonction de véhicule pour régler le paramètre de véhicule au véhicule automobile (2) si une intention de réglage est interprétée à partir de la réponse par le programme d'interprétation (12).

4. Procédé selon l'une quelconque des revendications précédentes, dans lequel le message de réponse du serveur de flotte de véhicules (7) est généré par un chatbot.

5. Procédé selon l'une quelconque des revendications précédentes, dans lequel le programme d'interprétation (12) comprend un algorithme d'auto-apprentissage qui reconnaît une sémantique des messages provenant du terminal mobile (3, 4, 5, 6) pour déterminer l'appel de fonction de véhicule.

6. Procédé selon l'une quelconque des revendications précédentes, dans lequel il est déterminé par le serveur de flotte de véhicules (7) quelles fonctions de véhicule sont mises à disposition par le véhicule automobile (2), dans lequel un message d'erreur est envoyé par le serveur de flotte de véhicules (7) au terminal mobile (3, 4, 5, 6) si une fonction de véhicule non présente est déterminée en tant qu'appel de fonction de véhicule.

7. Procédé selon l'une quelconque des revendications précédentes, dans lequel le procédé comprend en outre, avant l'étape b), les étapes suivantes : création d'un profil de médias sociaux pour le véhicule automobile (2) et association du profil de médias sociaux à l'interface de médias sociaux (8, 9, 10, 11) du serveur de flotte de véhicules (7), dans lequel une demande d'autorisation est envoyée au véhicule automobile (2) lors de l'association du profil de médias sociaux à l'interface de médias sociaux (8, 9, 10, 11), dans lequel l'association ne s'effectue que si une validation de la demande d'autorisation est effectuée par le véhicule automobile (2).

8. Procédé selon l'une quelconque des revendications précédentes, dans lequel plusieurs interfaces de médias sociaux (8, 9, 10, 11) de différents fournisseurs sont mises à disposition sur le serveur de flotte de véhicules (7).

9. Procédé selon l'une quelconque des revendications précédentes, dans lequel, lors de la réception du message à l'étape b), il est en outre vérifié si un émetteur du message présente une autorisation de communication, dans lequel les étapes suivantes du procédé sont exécutées uniquement si l'émetteur présente l'autorisation.

10. Système (1) avec au moins un terminal mobile (3, 4, 5, 6), au moins un véhicule automobile (2) et un serveur de flotte de véhicules (7), dans lequel le serveur de flotte de véhicules (7) est conçu pour exécuter un procédé selon l'une quelconque des revendications précédentes.
